# EUROPEAN PATENT SPECIFICATION

(11) **EP 1 872 656 B1**
(45) Date of publication and mention of the grant of the patent: **10.11.2010**
(21) Application number: 07251464.9
(22) Date of filing: 02.04.2007
(51) Int. Cl.: A01K 87/00

(54) **Fishing pole**
Angelrute
Canne à pêche

(30) Priority: 31.03.2006 GB 0606516; 21.02.2007 GB 0703305
(43) Date of publication of application: 02.01.2008
(73) Proprietor: Preston Innovations Limited, Telford, Staffordshire TF3 3BA (GB)
(72) Inventor: Preston, David, Telford, Staffordshire, TF3 3BA (GB)
(74) Representative: Newell, William Joseph

(56) References cited:
- EP-A- 1 183 945
- FR-A- 2 560 005
- GB-A- 2 282 946
- GB-A- 2 352 953

## Description

This invention relates to fishing pole arrangements, fishing pole sections and bushes for use therein. More particularly, the invention relates to fishing pole arrangements and components for use therein which allow the angler to control the length, tension and/or elasticity of the integral pole elastic while playing and landing fish.

Modern day anglers increasingly use fishing poles which are of lightweight hollow tubular form, typically being constructed of carbon fibre material. These fishing poles enable very accurate positioning of the angler's float.

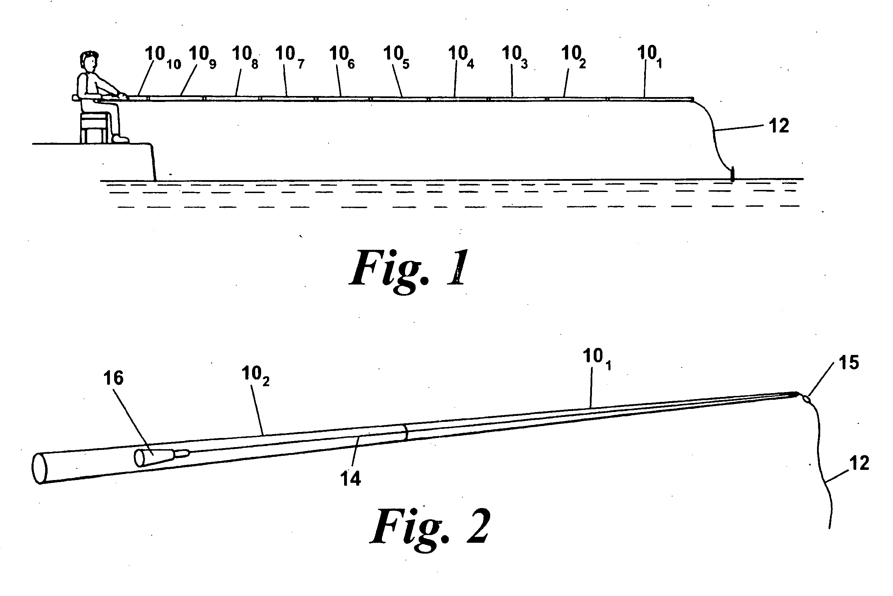

A typical conventional design of fishing pole is shown in Figure 1 of the accompanying drawings and consists of a number of hollow tapered tubular sections 10₁ to 10₁₀ that fit together by fitting the front end of a rear section into the rear end of a forward section. The foremost is numbered '1' and the others in sequence. Over the length of the pole, these sections become smaller in diameter by a gradual taper, towards the terminal or tip section 1 through which the fishing line 12 passes to be attached to the float. Within the foremost pole sections (typically one, two or three) a length of rubber thread 14 is inserted to act as a shock absorber when retrieving a hooked fish. The thread 14 is connected to the line 12 by means of a slip connector 15. Referring to Figure 2 of the accompanying drawings, the elastic 14 is normally anchored inside these sections by means of a bung-shaped accessory 16 that the elastic is tied to and which is trapped in the section 10₂ by the taper of the internal wall of the section.

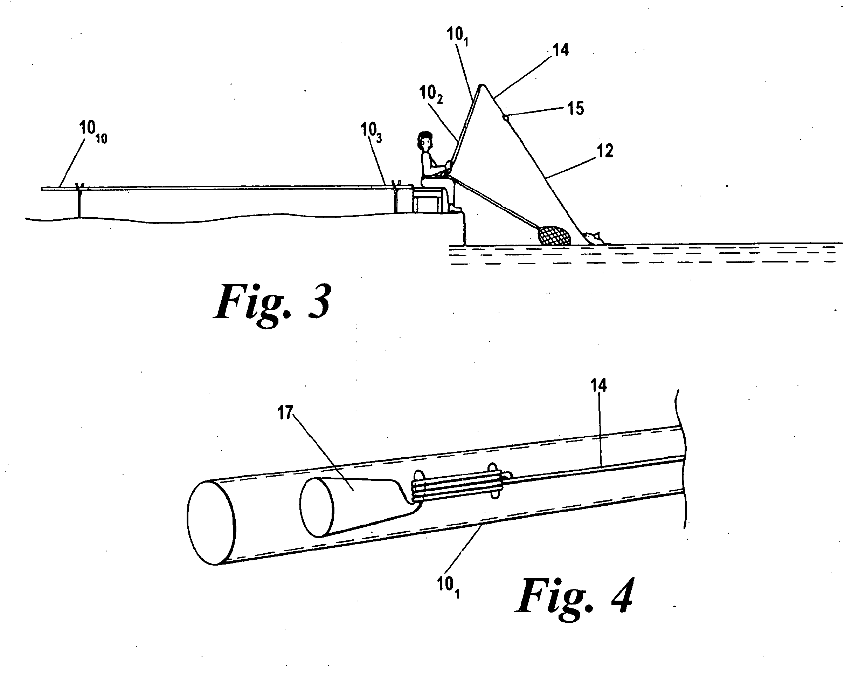

In use, the pole is extended by adding successive sections 10ₙ to the rear end thereof until the tip lies over the required stretch of water. Once a fish has been hooked, the general technique is to pass the pole backwards through the angler's hands, keeping the pole horizontal, until the last two or three elasticated sections 10₁, 10₂ are reached. These sections are then separated from the rest of the pole and the fish is guided into a landing net by raising these sections to an upright position as seen in Figure 3 of the accompanying drawings.

The elasticated sections can be fitted with heavy or lighter elastics depending on the targeted fish size, with heavier elastics being suited to larger fish and lighter elastics for smaller fish. In addition, a similar effect to using a heavy elastic can be achieved by increasing the tension of a lighter elastic thread by reducing its effective length. This may be achieved by using an adapted bung accessory 17 that incorporates a facility to wind elastic on it, therefore reducing the length of the elastic in use and effectively providing a preload to the remaining elasticated line as shown in Figure 4 of the accompanying drawings, see e.g. document GB 2352953 A.

A problem with the above method of altering the pole elastic tension is that the angler is not able to access and alter the elastic tension device whilst landing a fish. The angler must therefore anticipate the likely size of fish to be caught before he assembles the pole. Also, this gives a fixed preload and does not allow the preload to be adjusted dynamically whilst landing the fish.

Accordingly, we have designed a system which allows the pole elastic tension to be adjusted whilst landing a fish. The ability to control the tension means that the angler can target small fish using a light elastic, whilst at the same time being able to effect the landing of larger fish should one be hooked, by increasing the elastic tension on landing the fish.

GB2282946A discloses a fishing rod with a fishing reel provided with hollow rod sections and a side aperture in one of the rod sections through which the line passes from the reel into the interior of the hollow rod tube and thence out of the tip of the rod. This is a fishing rod configuration rather than a fishing pole.

Accordingly, according to claim 1, this invention provides a fishing pole arrangement comprising a hollow tubular fishing pole with an open end at its forward tip, and an elastic fishing line at least a portion of which is elastically extendable, wherein the fishing pole has a side aperture in a side wall of the pole whereby the fishing line passes through the open end at the tip of the pole interiorly of the pole to exit through said side aperture to carry a stop means to anchor an end portion of the fishing line against passage through said side aperture.

The term elastic fishing line is used to mean that the thread or filament is designed to undergo significant elastic extension compared to the line to which it is attached, so as to provide a shock absorbing effect. Thus the elastic line may undergo extension of 100% or more in use, whereas the line to which it is attached may be designed to extend by well under 50%. The elastic fishing line may be a single length of elastic, or it may be made up of lengths of different elasticity elastics connected end to end, or a length of elastic connected end to end with one or more lengths of relatively inelastic material.

In this manner an end of the fishing line protrudes externally through the side aperture so the angler can grab the end of the line to vary the preload/tension. Preferably the pole is made up of tubular sections adapted to fit together. Depending on the length of the sections, the side aperture could be provided in the forward tip section, or in a section to the rear of the tip section, such as the second or third.

Where as is customary in many instances, the pole comprises a thin-walled tubular section, a region of the tubular wall adjacent the side aperture may be locally thickened to reinforce it.

Conveniently, said fishing line comprises an elastic element extending through said side aperture, and then interiorly of the fishing pole, to pass to the open end in said tip section, there to be connected to a relatively inelastic fishing line. The connector may be for example a slip connector.

The stop means may comprise an enlarged region on the fishing line exteriorly of the side aperture, which could for example be provided by a knot in the fishing line, with or without a relatively rigid ring or bead.

Conveniently, side aperture is provided with a guide to prevent the elastic line snagging on the side of the aperture. Thus the aperture may be provided with a bush means inserted into a side wall of the fishing pole. The bush means may be formed of a low friction material, such as PTFE.

The invention may be performed in various ways, and an embodiment thereof will now be described by way of example only, reference being made to the accompanying drawings in which:
Figure 1 is a schematic view showing an existing multiple section fishing pole to position the float at a desired location over a stretch of water;
Figure 2 is a schematic view showing the top two elasticated pole sections in a conventional fishing pole of the type shown in Figure 1;
Figure 3 is a schematic view showing the top two elasticated sections detached from the remainder of the pole whilst the angler lands a fish;
Figure 4 is a schematic view of a fitting of a prior art bung into the rear end of an elasticated pole section;
Figure 5 is a schematic view of the two elasticated sections of a fishing pole arrangement in accordance with this invention;
Figures 6(a), (b), (c) and (d) are respective side, front, rear and section views of a bush for use in the embodiment of the invention illustrated in Figure 5, and
Figure 7 is a cross-section view through a fishing pole section fitted with a bush of the type illustrated in Figures 6(a) to (d) illustrating the line of the elastic thread.

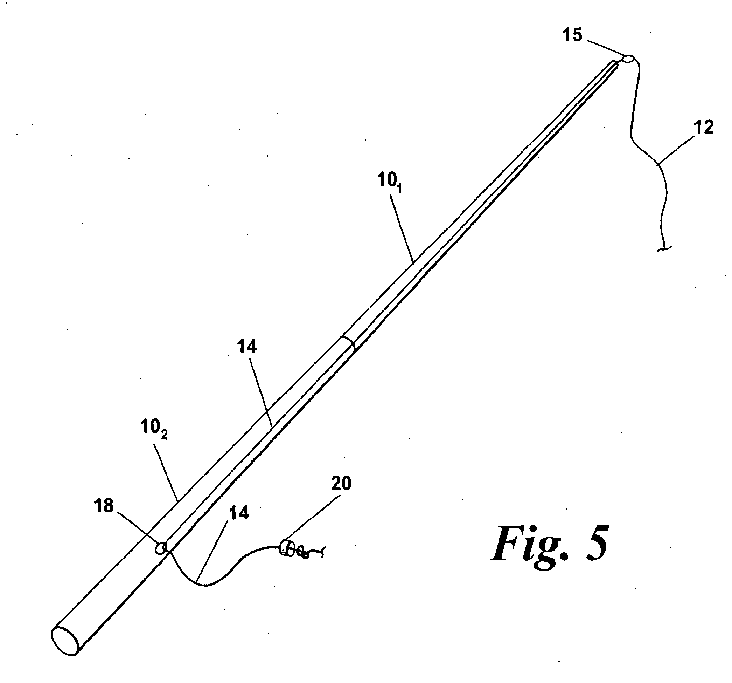

Referring now to Figures 5 to 7, in this embodiment the tip section 10₁ (first section) and second section 10₂ of a multi-pole section are shown as elasticated (i.e. an elastic thread passes along the inside of both). It will of course be appreciated that there could be more than two sections elasticated or indeed the elastic could pass down just through the first section 10₁. The sections 10₁, 10₂ are each made of thin walled carbon fibre composite material to give a stiff yet lightweight construction. An elastic thread 14 is connected to a conventional fishing line 12 (e.g. of nylon) by a suitable slip connector 15 at the tip of the pole and then runs down the inside of the pole through the full length of the tip section 10₁, down approximately two thirds of the second section 10₂, then to exit through a side aperture 18 in the wall of the tube to terminate in a knot or bead 20.

The modulus or elasticity of the elastic thread 14 varies in accordance with the amount of tension applied. Thus, if the angler wishes to increase the elasticity of the elastic thread he can grab the end of the thread that protrudes through the aperture 18 and pull out a length of elastic through the side of the pole thereby reducing the elasticity of the remaining elastic inside. This can be done just momentarily, or for longer periods. In addition of course, as the line 12 comes under tension when a fish is on the line, the slip connector 15 is pulled clear of the tip of the pole, drawing the extended elastic thread with it.

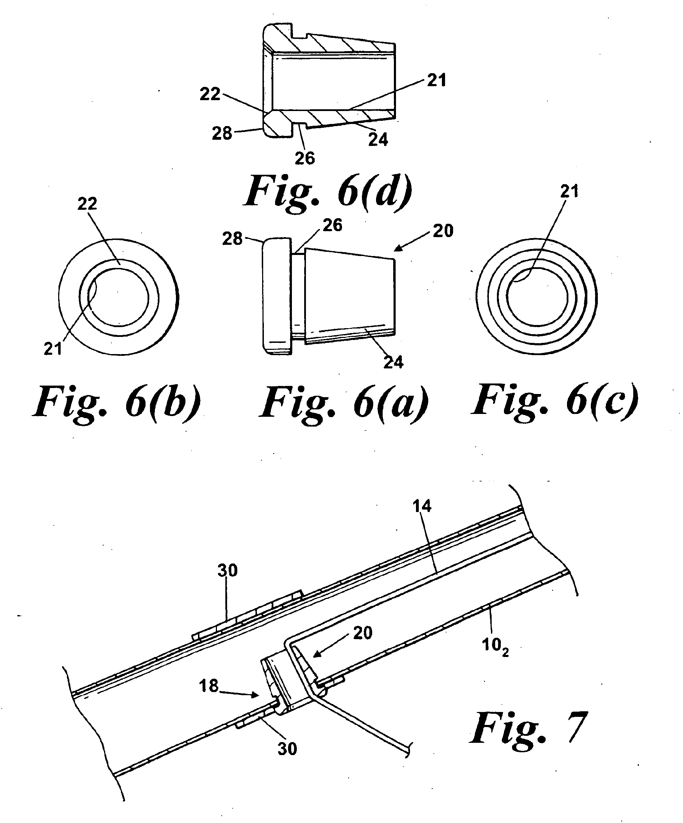

Referring now to Figures 6 and 7, there is shown a bush 20 for fitting into the aperture 18 in the wall of the tube 10₁ to ensure that the elastic thread 14 can slip through the aperture 18 without damage. It should be noted that the wall of the tube is very thin and might otherwise cut through the elastic. The bush 20 therefore provides a generally cylindrical bore 21 with a smoothly flared outer edge 22 and a tapered external section 24 terminating in an annular groove 26 and an enlarged head 28. The tapered section 24 and annular groove 26 are designed so that the bush 20 can be snap-fitted into an appropriately sized hole in the wall of a pole section. As will be seen, the axial length of the bush 20 ensures that the elastic thread 14 is held away from the inner walls of the pole section and near centre line of the pole section. In order to ensure that the pole section is not compromised by the provision of a hole in the side, and to accommodate the twisting loads transmitted by the bush in use, the wall section of the pole is preferably locally enlarged to reinforce it, by provision of additional fibre plies 30. Instead of a separate bush, an integral guide may be formed in the wall of the pole during manufacture.

## Claims

1. A fishing pole arrangement comprising a hollow tubular fishing pole (10₁...101₀) with an open end at its forward tip, and an elastic fishing line (14) at least a portion of which is elastically extendable, **characterized in that** said fishing pole has a side aperture (18) in a side wall of the pole whereby the fishing line passes through the open end at the tip of the pole interiorly of the pole to exit through said side aperture to carry a stop means (20) to anchor an end portion of the fishing line against passage through said side aperture.

2. A fishing pole arrangement according to Claim 1, wherein the pole is made up of tubular sections (10₁... 10₁₀) adapted to fit together.

3. A fishing pole arrangement according to Claim 2, wherein the side aperture (18) is provided in the forward tip section (10₁).

4. A fishing pole arrangement according to Claim 2, wherein the aperture (18) is provided in a section (10₂) to the rear of the tip section.

5. A fishing pole arrangement according to any of the preceding Claims, wherein the pole comprises a thin-walled tubular section (10ₙ), and a region (30) of the tubular wall adjacent the aperture (18) is locally thickened.

6. A fishing pole arrangement according to any of the preceding Claims, wherein said fishing line comprises an elastic element (14) extending through said side aperture (18), interiorly of the fishing pole, to pass to the open end in said tip section, there to be connected (15) to a relatively inelastic fishing line (12).

7. A fishing pole arrangement according to any of the preceding Claims, wherein the stop means (20) comprises an enlarged region on the fishing line exteriorly of the side aperture (18).

8. A fishing pole arrangement according to Claim 7, wherein the enlarged region includes a knot in the fishing line.

9. A fishing pole arrangement according to Claim 7 or Claim 8, wherein the enlarged region includes a ring or bead (20).

10. A fishing pole arrangement according any of the preceding Claims, wherein the side aperture (18) is provided in a bush means (20) inserted into a side wall of the fishing pole.

11. A fishing pole arrangement according to Claim 10, wherein the bush (18) means is formed of a low friction material.

12. A fishing pole arrangement according Claim 10, wherein the bush means (18) is formed of PTFE.

## Patentansprüche

1. Angelruten-Vorrichtung, umfassend eine hohle, rohrförmige Angelrute (10₁ ... 10₁₀) mit einem offenen Ende an ihrer vorderen Spitze und einer elastischen Angelleine (14), von der wenigstens ein Teil elastisch verlängerbar ist, **dadurch gekennzeichnet, daß** die Angelrute eine Seitenöffnung (18) in einer Seitenwand der Rute aufweist, wodurch die Angelleine durch das offene Ende an der Spitze der Rute im Inneren der Rute verläuft, um durch die Seitenöffnung auszutreten, die eine AnschlagEinrichtung (20) trägt, um einen Endteil der Angelleine gegen Durchlauf durch die besagte Seitenöffnung zu sichern.

2. Angelruten-Vorrichtung nach Anspruch 1, **dadurch gekennzeichnet, daß** die Rute aus rohrförmigen Abschnitten (10₁ ... 10₁₀) aufgebaut ist, die zusammenpassen.

3. Angelruten-Vorrichtung nach Anspruch 2, **dadurch gekennzeichnet, daß** die Seitenöffnung (18) in dem vorderen Spitzenabschnitt (10₁) vorgesehen ist.

4. Angelruten-Vorrichtung nach Anspruch 2, **dadurch gekennzeichnet, daß** die Öffnung (18) in einem Abschnitt (10₂) vorgesehen ist, der hinter dem Spitzenabschnitt liegt.

5. Angelruten-Vorrichtung nach einem der vorhergehenden Ansprüche, **dadurch gekennzeichnet, daß** die Rute einen dünnwandigen, rohrförmigen Abschnitt (10ₙ) besitzt, und daß ein Bereich (30) der rohrförmigen Wand neben der Öffnung (18) örtlich verdickt ist.

6. Angelruten-Vorrichtung nach einem der vorhergehenden Ansprüche, **dadurch gekennzeichnet, daß** die Angelleine ein elastisches Element (14) aufweist, das sich durch die Seitenöffnung (18) im Inneren der Angelrute erstreckt, um zu dem offenen Ende des Spitzenabschnitts zu laufen, wo es mit einer relativ unelastischen Angelleine (12) verbunden ist (15).

7. Angelruten-Vorrichtung nach einem der vorhergehenden Ansprüche, **dadurch gekennzeichnet, daß** die Stopp-Einrichtung (20) auf der Angelleine, außerhalb der Seitenöffnung (18) einen vergrößerten Bereich bildet.

8. Angelruten-Vorrichtung nach Anspruch 7, **dadurch gekennzeichnet, daß** der vergrößerte Bereich einen Knoten in der Angelleine aufweist.

9. Angelruten-Vorrichtung nach Anspruch 7 oder 8, **dadurch gekennzeichnet, daß** der vergrößerte Bereich einen Ring oder eine Perle (20) aufweist.

10. Angelruten-Vorrichtung nach einem der vorhergehenden Ansprüche, **dadurch gekennzeichnet, daß** die Seitenöffnung (18) in einer Muffen-Einrichtung (20) vorgesehen ist, die in eine Seitenwand der Angelrute eingesetzt ist.

11. Angelruten-Vorrichtung nach Anspruch 10, **dadurch gekennzeichnet, daß** die Muffen-Einrichtung (18) aus einem reibungsarmen Material gebildet ist.

12. Angelruten-Vorrichtung nach Anspruch 10, **dadurch gekennzeichnet, daß** die Muffen-Einrichtung (18) aus PTFE gebildet ist.

## Revendications

1. Dispositif de canne à pêche comprenant une canne à pêche tubulaire creuse (10₁...10₁₀) avec une extrémité ouverte à sa pointe avant, et une ligne de pêche élastique (14) dont au moins une partie est apte à s'étendre élastiquement, **caractérisé par le fait que** ladite canne à pêche a une ouverture latérale (18) dans une paroi latérale de la canne, ce par quoi la ligne de pêche passe à travers l'extrémité ouverte à la pointe de la canne intérieurement à la canne pour sortir par ladite ouverture latérale pour porter un moyen d'arrêt (20) pour ancrer une partie d'extrémité de la ligne de pêche contre un passage à travers ladite ouverture latérale.

2. Dispositif de canne à pêche selon la revendication 1, dans lequel la canne est faite de sections tubulaires (10₁...10₁₀) aptes à s'adapter les unes aux autres.

3. Dispositif de canne à pêche selon la revendication 2, dans lequel l'ouverture latérale (18) est disposée dans la section de pointe avant (10₁).

4. Dispositif de canne à pêche selon la revendication 2, dans lequel l'ouverture (18) est disposée dans une section (10₂) à l'arrière de la section de pointe.

5. Dispositif de canne à pêche selon l'une quelconque des revendications précédentes, dans lequel la canne comprend une section tubulaire à paroi mince (10ₙ), et une région (30) de la paroi tubulaire adjacente à l'ouverture (18) est épaissie localement.

6. Dispositif de canne à pêche selon l'une quelconque des revendications précédentes, dans lequel ladite ligne de pêche comprend un élément élastique (14) s'étendant à travers ladite ouverture latérale (18), intérieurement à la canne à pêche, pour passer à l'extrémité ouverte dans ladite section de pointe, de façon à y être reliée (15) à une ligne de pêche relativement non élastique (12).

7. Dispositif de canne à pêche selon l'une quelconque des revendications précédentes, dans lequel le moyen d'arrêt (20) comprend une région élargie sur la ligne de pêche extérieurement à l'ouverture latérale (18).

8. Dispositif de canne à pêche selon la revendication 7, dans lequel la région élargie comprend un noeud dans la ligne de pêche.

9. Dispositif de canne à pêche selon l'une des revendications 7 ou 8, dans lequel la région élargie comprend une bague ou un jonc (20).

10. Dispositif de canne à pêche selon l'une quelconque des revendications précédentes, dans lequel l'ouverture latérale (18) est disposée dans un moyen formant douille (20) introduit dans une paroi latérale de la canne à pêche.

11. Dispositif de canne à pêche selon la revendication 10, dans lequel le moyen formant douille (18) est formé d'un matériau à faible coefficient de frottement.

12. Dispositif de canne à pêche selon la revendication 10, dans lequel le moyen formant douille (18) est formé de poly(tétrafluoroéthylène).
